# EUROPEAN PATENT APPLICATION

(11) **EP 1 568 661 A1**
(43) Date of publication of application: **31.08.2005**
(21) Application number: 03733090.9
(22) Date of filing: 27.05.2003
(51) Int. Cl.: C02F 1/68, B01F 1/00

(54) **REDUCING WATER AND ITS PRODUCING METHOD**

(30) Priority: 05.12.2002 JP 2002353610; 22.04.2003 JP 2003117578
(71) Applicant: Murota, Wataru, Ishikawa 929-0324 (JP)
(72) Inventor: MUROTA, Wataru, Kahoku-gun, Ishikawa 929-0324 (JP); YAMAZAKI, Kenji, Nara-shi, Nara 631-0042 (JP)
(74) Representative: Hallam, Arnold Vincent
(86) International application number: PCT/JP2003/006587
(87) International publication number: WO 2004/050563

(57) **Abstract**

The reduced water of the present invention is obtained by dissolving hydrogen gas that has been cooled to between -180 and 60 degrees Celsius and pressurized to between 0.5 and 500 atmosphere pressure into water that has been cooled to between 0 and 50 degrees Celsius, then restoring the temperature and pressure of the water obtained to normal.

Having extremely low redox potential of -175 mV or less while having close to neutral pH of no higher than 9.0, such reduced water can be used for drinking and cooking in large quantities on a daily basis without causing any health problems.

Furthermore, the present invention permits such nearly neutral yet low redox potential reduced water, with its strong reductive properties to be produced economically and through the use of a compact apparatus.

## Description

### Field of the Invention

The present invention relates to a new type of reduced water and a method for producing such water. More specifically the present invention relates to water with reduced hydrogen content and a method for producing such water, and in particular to a new type of reduced hydrogen-containing water that has low oxidation-reduction potential while being close to neutral in pH.

### Background Art

Ionized alkaline water has always been acknowledged to be good for the health, because it has remedial effects in the treatment of a wide variety of illnesses (including autoimmune disorders such as cerebral stroke, myocardial infarction, arteriosclerosis, cancer, hyperlipemia, diabetes, hepatitis, nephritis, ulcers, damaged gastric mucosa, pneumonia, cataracts, retinitis pigmentosa, retinal detachment, and collagenosis; allergic disorders such as rheumatoid arthritis, AIDS, Parkinson's disease, Alzheimer's disease, atopic dermatitis and hay fever; and assorted problems such as spots, freckles, wrinkles, hypertension, enlarged prostate, asthma, acne and eczema; refer to Japan Laid-Open Unexamined Patent Application 2001-145880). Moreover, it is known to have the effect of suppressing metastasis of cancer cells, besides possessing various other beneficial properties (refer to Patent Document 1 (JP, 2001-137852, A) and Patent Document 2 (JP, 2002-254078, A). Consequently, ionized alkaline water generators for producing ionized alkaline water have come into widespread use. Such publicly known ionized alkaline water generators use an anode and cathode to electrolyze tap water, or a saline solution or NaOH aqueous solution, forming acidic water at the anode and alkaline water at the cathode. The acidic water formed is then utilized as the ionized alkaline water product. This alkaline water formed at the cathode contains a large number of hydroxyl ions (OH-) and in addition possesses hydrogen gas, generated by and dissolved through the process of electrolysis. Because the resulting water displays reductive properties it is also termed "alkaline reduced water."

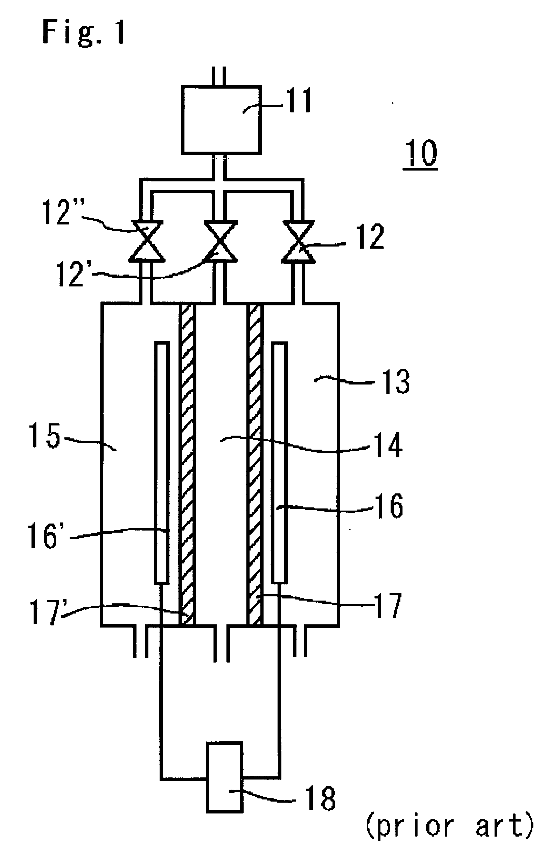

Described herein below is a specific publicly known ionized alkaline water production apparatus, with the aid of a drawing. Fig. 1 shows an apparatus disclosed in Patent Document 3 (JP, H08-187492 ,A) that produces desalinated seawater and ionized alkaline water simultaneously by means of the electro dialysis process. In this apparatus, two diaphragms facing each other are deployed and a pair of electrodes is provided such that one is located on the outer side of one diaphragm and the other on the outer side of the other diaphragm; direct current voltage is then applied between such electrodes, and when seawater passes through the space between the two diaphragms, the natrium ions therein migrate toward the negative electrode through one of the diaphragms, while the chlorine ions migrate toward the positive electrode through the other diaphragm. The occurrence of these phenomena serves to decrease the seawater's salt concentration, and thereby allows the apparatus to perform desalination; by raising the voltage applied between the electrodes during the process to a level above the decomposition voltage level for water, the apparatus is additionally enabled to produce alkaline water with low reduction potential at the negative electrode.

Specifically, in this apparatus 10, an activated carbon filter 11 desalinates the raw water by removing organic matter and sends the desalinated water via three flow control valves 12, 12' and 12" to an anode chamber 13, a deionizing chamber 14 and a cathode chamber 15, respectively. The anode chamber 13, deionizing chamber 14 and cathode chamber 15 are separated from each other by porous diaphragms 17 and 17'. Besides porous diaphragms, bipolar ion exchange diaphragms possessing both cation exchange and anion exchange functions may be used. Platinum electrodes 16 and 16' are installed in the anode chamber 13 and cathode chamber 15, respectively. When voltage of a constant degree is applied to the platinum electrodes 16 and 16' by means of a variable voltage direct current power source, the anions contained in the water inside the deionizing chamber 14 migrate to the anode chamber 13 through the diaphragm 17, while cations in the water migrate to the cathode chamber 15 through the diaphragm 17'; as a result, deionized water with low dissolved ion concentration is obtained from the deionizing chamber 14.

In this process, if the voltage to be applied to the electrodes 16 and 16' is set to a higher level than the decomposition voltage for water, that is, to over 2V or preferably to over 4V, electrolytic reactions will generate O₂ from the water inside the anode chamber 13, causing the water's oxidation-reduction potential (hereinafter referred to "redox potential") to rise, and at the same time cause that water's pH to become acidic due to the presence of Cl⁻ and SO₄²⁻ ions that have migrated in through the diaphragm 17. On the other hand, the electrolytic reactions in the water inside the cathode chamber 15 will generate hydrogen, causing a fall in that water's redox potential, while at the same time causing that water's pH to become alkaline due to the presence of the generated hydroxyl ions (OH-) and the Na⁺, Ca⁺ and ammonia ions, etc., that have migrated in through the diaphragm 17'.

Ionized alkaline water produced in this manner exhibits reductive power due to its low redox potential, and at the same time normally possesses alkalinity exceeding pH 9. However, water obtained with a low redox potential but high reductive power has a higher concentration of hydroxyl ions (OH⁻), resulting in alkaline water with pH of 10.or higher, which is the level at which water is held to become unsuitable for drinking. Thus, although ionized alkaline water is known to be good for the health, it is not considered appropriate for use in large quantities for drinking or cooking on a daily basis, the reason being that gastric juices already have a relatively high pH level because of their acidic nature - even in the lowest case of around 9 - that renders the consumption of alkaline water inadvisable for the health.

Because of its appropriateness for medical and health use, provision for water that has close to neutral pH and strong reductive properties, or low redox potential has become essential. Conventional alkaline reduced water production apparatus however does not produce water containing adequate reductive power or electrolyzed reduced water of pH 9 or lower to make it suitable for drinking. For example, the electrolyzed reduced water disclosed in the embodiment in Patent Document 1 (JP, 2001-137852, A) is claimed to achieve a redox potential of -729 mV at pH 10.7 through the method of electrolysis of a NaOH aqueous solution by which hydrogen gas is not generated, but the pH level of such water at 9.6 to 9.9 achieves a redox potential only of -70 to -211 mV. There is no disclosure however with respect to the redox potential of such electrolyzed reduced water at pH 9 or lower.

The claims of Patent Document 2 (JP, 2002-254078, A) describe electrolyzed reduced water as an invention that possesses "pH of 7 to 12" and "redox potential of -5 to -100 mV" at 12 to 14 degrees Celsius. However, although it is likewise claimed in this application that electrolyzed reduced water of redox potential -70 to -211 mV is obtained at pH 9.6 to 9.9, no concrete data is given concerning electrolyzed reduced water with pH of 9 or lower.

In the same vein, the invention disclosed in JPatent Document 4 (JP, 2000-153277, A) seeks to address the inability of conventional apparatus to produce electrolyzed reduced water with adequate reductive power at a pH level of 9.5 or lower. This invention claims to provide electrolyzed reduced water with the same pH as that of the raw water that is put into the electrolyzer through the use of diaphragms that selectively allow hydroxyl ions (OH⁻) to pass through them, and a special catalyst. But no specific values are disclosed concerning the pH and redox potential of the electrolyzed reduced water actually obtained.

It is apparent from the above that hitherto, electrolyzed reduced water produced through the electrolytic process has not yielded low redox potential with adequate reductive power at pH 9 or lower. This may be explained as follows. The production of electrolyzed reduced water generally causes hydrogen gas to be generated at the negative electrode which in turn brings about an increase in reductive power, or in other words the fall in redox potential. However, because the solubility of hydrogen gas in water is extremely low, specifically being 2.1 ml/100 ml at 0 Celsius degree, 1.8 ml / 100 ml at 20 degrees Celsius and 1.6 ml/100 ml at 100 degrees Celsius (Editorial Board of Kagaku Daijiten, Eds., *Kagaku Daijiten* 5 ["Comprehensive Chemical Dictionary 5"], Kyoritsu Shuppan, 26^{th} printing, 15 Oct. 1981, p. 48), so that at close to neutral pH, the hydrogen gas generated by the electrolysis of the water immediately vaporizes and is consequently removed from the water.

### Disclosure of the Invention

Accordingly the present inventors conducted various experiments with the intent of obtaining, by some method other than electrolytic reduction, reduced water with close to neutral pH that could be used for drinking and cooking in large quantities like tap water. As a result of such endeavors, the inventors concocted the present invention by ascertaining that when normal-temperature or cooled hydrogen gas is dissolved under pressure in normal-temperature or chilled raw water until a state of equilibrium is reached, after which the pressure is removed with the water in such state and the water reverts to normal temperature and pressure, hydrogen gas amounting to between several times and several hundred times the quantity obtained with the normal solubility of hydrogen is dissolved in the water, and even though a certain amount of the dissolved hydrogen will vaporize, nearly all of the dissolved hydrogen gas remains stably dissolved without vaporizing, resulting in water with extremely low redox potential despite being close to neutral in pH.

Thus, the purposes of the present invention are to provide water that possesses adequate reductive properties while being close to neutral in pH, and a method for producing such water. Such purposes can be accomplished by means of a number of setups described below.

According to one aspect of the present invention, reduced water with a pH no higher than 9.0 and no lower than 6.5, preferably no higher than 8.5 and no lower than 6.5, and a redox potential no higher than -150 mV and no lower than -900 mV can be provided at normal temperature and pressure. Such water produced would be suitable for medical use and can also be ingested or used for cooking in large quantities on a daily basis because its pH is close to neutral and has adequately low redox potential no higher than -150 mV, not otherwise obtainable through the electrolytic reduction process. Thus the present invention permits the provision of reduced water that has adequately low redox potential while meeting current standards for tap water quality, which hold the desirable pH for drinking water, that is, no lower than 5.8 and no higher than 8.6.

According to another aspect of the present invention, reduced water can be provided by a production method whereby hydrogen gas with a temperature ranging between -180 and 60 degrees Celsius pressurized to between 0.5 and 500 atmosphere pressure is dissolved in raw water with a temperature ranging between 0 and 50 degrees Celsius, and thereafter the resulting water is returned to normal temperature and pressure. This method produces reduced water that has adequately low redox potential with pH ranging from the alkaline zone to the neutral zone without using the electrolytic reduction process.

In this method, the raw water should preferably be selected from at least one of the following: tap water, purified tap water, ionized alkaline water, mineral-containing water, spring water, desalinated seawater. Depending on the properties of the particular kind(s) selected, the use of such raw water would enable the provision of neutrally reduced water, alkaline reduced water or reduced water with mineral content, etc., as may be appropriate.

This method can likewise provide reduced water with redox potential no higher than -150 mV and no lower than -900 mV, and pH no higher than 9.0 and no lower than 6.5, or preferably, no higher than 8.5 and no lower than 6.5.

In the production of reduced water under the present invention, the lower limit for the temperature of the raw water is set at 0 degrees Celsius for the reason that at below 0 degrees Celsius water freezes, causing inconvenience in handling. Yet temperatures below 0 degrees Celsius would be preferred in increasing the capacity for dissolving the hydrogen gas in large quantities. The upper limit for the temperature of the raw water is set at around 50 degrees Celsius for the following reasons: The temperature of raw water, left in places exposed to ordinary sunshine, often reaches 50 degrees Celsius, and raw water utilized at such temperature level will not greatly result in the fall of solubility of the hydrogen gas. If the hydrogen gas supplied to the process is of low temperature, it will naturally cool such hot raw water, which can therefore be used without any problem.

The upper limit for the temperature of the hydrogen gas is set at 60 degrees Celsius for the reason that it is usually supplied in cylinders and when placed outdoors will often reach temperatures of around 60 degrees Celsius. However, while hydrogen of such a temperature can still be adequately dissolved in the raw water, the use of hydrogen gas with higher temperatures would be undesirable as they would lead to a rise in the water's temperature which would in turn decrease solubility. The lower limit for the temperature of the hydrogen gas is set at -180 degrees Celsius for the reason that hydrogen is sometimes supplied in the form of liquid hydrogen cooled to below -235 degrees Celsius, and -180 degrees Celsius has been established experimentally as the lowest temperature at which hydrogen gas, vaporized from such liquid hydrogen, can be dissolved in the raw water without causing the latter to solidify - though the precise value of the hydrogen gas's temperature will depend also on the raw water's temperature and the pressure and flow rate at which the hydrogen gas is supplied. Nonetheless, since the temperature and pressure of the reduced water obtained from the process is ultimately restored to normal, it will be ideal from the point of view of economy and energy efficiency to keep the temperature of the hydrogen at or above 0 degrees Celsius when it is dissolved in the raw water, and to utilize the low temperature liquid hydrogen for other purposes.

The prescribed atmosphere pressure (gauge pressure) for pressurizing the hydrogen gas when it is to be dissolved in the raw water is between 0.5 and 500 atmosphere pressure. While it is true that the quantity of hydrogen gas that will be dissolved in the raw water would be greater if the pressure where higher, it is also the case that an initially very highly pressurized hydrogen will result in large amounts of it being vaporized when the temperature and pressure levels of the reduced water are ultimately restored to normal. Therefore using pressures at a level higher than the aforementioned range would be wasteful in terms of both economy and energy. Preferably, pressure ranging from 0.5 to 10 atmosphere pressure should be used. Still, pressure ranging from 1 to 5 atmosphere pressure would be desirable.

After restoration of the temperature and pressure to normal, the stably dissolved hydrogen gas will constitute a weight of between 0.001 and 0.1 percent in proportion to the water, depending on the temperature and pressure of the gas when it was dissolved. As mentioned above, since the solubility of hydrogen gas in water at normal temperature and pressure is around 2 ml/100 ml (approximately 1.8 × 10⁻⁴ percent by weight), the quantity of dissolved hydrogen in the reduced water obtained under the present invention will be about 5 to 500 times greater than in the case where the gas is simply dissolved in the water at normal temperature and pressure.

A plausible reason why such greater amount of hydrogen gas is stably dissolved in the water by the present process is that some of the gas is dissolved in a supersaturated state. This explanation alone, however, is insufficient because if supersaturation were the only factor involved, the quantities of dissolved hydrogen should be larger. It is thus surmised that because the pH of the reduced water obtained under the present invention differs from that of the raw water, reactions of some kind occur. Finding the detailed reasons requires further research, but for the time being, the present inventors have inferred that a phenomenon of the following kind takes place.

Generally no reactions occur when hydrogen gas is dissolved in water at normal temperature and pressure. But if hydrogen gas is dissolved in water under pressure, the water's oxygen atoms and the hydrogen gas's hydrogen atoms will come together and hydrogen bonding will take place as shown by the structural formula and chemical equation written below. Such bonding under pressure means that the hydrogen gas will be dissolved in greater quantities than would ordinarily be anticipated. A good number of the hydrogen bonds thus generated will remain in a stable state after restoration to normal temperature and pressure, and this has been inferred as the reason why the resulting returned to normal-temperature, normal-pressure water contains several times to several hundred times as much stably dissolved hydrogen gas than that in an ordinary case.

### Structural formula:

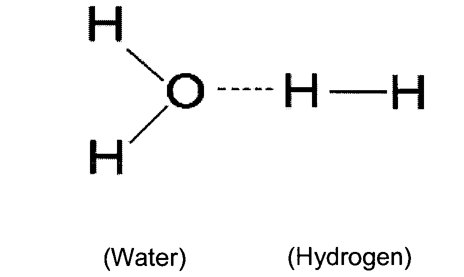

### Chemical equation:

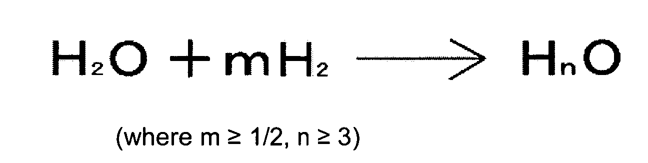

### Brief Description of the Drawing

Fig. 1 is a drawing of the apparatus disclosed in Patent Document 3 (JP, H08-187492, A) which simultaneously produces desalinated seawater and ionized alkaline water under the conventional electro dialysis process.

### Best Mode for Carrying Out the Invention

The present invention can employ widely-known gas-liquid contactors in its production of reduced water, and may employ either the batch or continuous flow type as may be deemed appropriate for its hydrogen gas supply. In addition, under the present invention, the hydrogen that vaporizes when the water is restored to normal temperature and pressure after having absorbed hydrogen gas at low temperature and high pressure can be recovered and utilized. Described below is the preferred embodiment of the present invention using concrete examples, hereinafter referred to as Implementations 1 to 6.

### Implementations 1 and 2

First of all, the pH and redox potential of each of the following were measured: tap water (the tap water of Nonoichi Town, Ishikawa Prefecture - "Case 1 "), alkaline reduced water (generated electrolytically by purifying the Case 1 tap water through a commercially-available purifier - "Case 2"), and purified water (the Case 1 tap water dechlorinated through an activated carbon filter - "Case 3"). Such measurements are indicated in Table 1 below.

The following process was then carried out as Implementation 1. A total of 5 l of normal-temperature hydrogen gas was made to bubble into 2 l of the Case 2 alkaline reduced water with a temperature of 20.0 degrees Celsius for 25 minutes at the rate of 200 ml/minute, with the pressure of the hydrogen gas regulated at 3 atmosphere pressure at the inlet and 0.5 atmosphere pressure at the outlet. Thereafter, maintaining its temperature at 20 degrees Celsius and maintaining the pressure likewise at normal levels, the redox potential and pH of the resulting reduced water were measured. The results are indicated together with the other measurements in Table 1.

Then the following process was carried out as Implementation 2. A total of 5 l of normal-temperature hydrogen gas was made to bubble into 2 l of the Case 2 alkaline reduced water, which had been chilled to 4 degrees Celsius, for 20 minutes at a rate of 250 ml/minute, with the pressure of the hydrogen gas regulated at 3 atmosphere pressure at the inlet and 0.5 atmosphere pressure at the outlet. Thereafter, maintaining its temperature at 20 degrees Celsius and maintaining the pressure likewise at normal levels, the redox potential and pH of the resulting reduced water were measured. The results are indicated together with the other measurements in Table 1.

**Table 1**

| | Specimen | Temperatur e | Redox Potential | pH |
|---|---|---|---|---|
| Case 1 | Tap water | 15°C | +350 mV | 7.2 |
| Case 2 | Alkaline reduced water | 5°C | -23 mV | 9.5 |
| Case 3 | Pure water | 4°C | +150 mV | 7.1 |
| Implementation 1 | Reduced water (1) | 20°C | -588 mV | 8.3 |
| Implementation 2 | Reduced water (2) | 4°C | -591 mV | 8.1 |

As may be seen from Table 1, the reduced water yielded by the present invention has extremely low redox potential of -588 to -591 mV even when its pH is close to the neutral zone of 8.1 to 8.3.

### Implementation 3

2 l of the Case 2 alkaline reduced water (obtained by means of a purifier) having a redox potential of -23 mV and pH of 9.5 was chilled to 5 degrees Celsius and put inside a sealed container, in which it was made to absorb hydrogen gas pressurized at 5 atmosphere pressure in a single-batch process. Then the hydrogen gas inside the sealed container was released, after which the resulting reduced water was divided into four portions, one of which was poured into a glass bottle and sealed (Specimen No. 1), while each of the other three portions was likewise poured into its own particular aluminum container and sealed (Specimens No. 2-4). Each specimen was left to stand at room temperature, and their redox potential and pH were measured relative to the lapse of time was determined. The results are compiled in Table 2.

**Table 2**

| Time elapsed | Temp erature | Specimen | | | | | | | |
|---|---|---|---|---|---|---|---|---|---|
| | | No.1 | | No. 2 | | No. 3 | | No.4 | |
| | | Potential | pH | Potential | pH | Potential | pH | Potential | pH |
| 0 hour | 14°C | -263 mV | 8.1 | -246 mV | 8.1 | -266 mV | 8.1 | -280 mV | 8.1 |
| 24 hours | 22°C | -375 mV | 8.0 | -277 mV | 8.0 | -275 mV | 7.9 | -305 mV | 8.0 |
| 48 hours | 26°C | -581 mV | 7.7 | -552 mV | 7.7 | -598 mV | 7.9 | -280 mV | 7.9 |
| 64 hours | 25°C | -201 mV | 8.0 | -267 mV | 7.9 | -210 mV | 7.8 | -274 mV. | 7.7 |

As shown in Table 2, reduced water obtained in accordance with the present invention has redox potential lower than -200 mV when its pH is no higher than 8.1. Further, when reduced water obtained in accordance with the present invention is stored inside a sealed container, there is a tendency for its redox potential to decrease gradually until it reaches a minimum level upon the lapse of 24 to 48 hours, and to rise thereafter. At present, the occurrence of such fluctuation in redox potential cannot as yet be explained. However, the rise in redox potential during the latter half of the overall time period (of 48 hours) may be explained by the entry of ambient air into the container's interior. This was sought to be verified by observing temporal changes in redox potential in the case where the sealed container is opened, and undertaken as Implementation 5, elucidated herein below.

### Implementation 4

2 I of the Case 3 pure water with a redox potential of +150 mV and pH of 7.1 was chilled to 4 degrees Celsius and put inside a sealed container, in which it was made to absorb hydrogen gas pressurized at 5 atmosphere pressure in a single-batch process. Then the hydrogen gas inside the sealed container was released, after which the resulting reduced water was divided into two portions, each of which was poured into a glass bottle of the same size and sealed (Specimens No. 5 and 6). Each specimen was left to stand at room temperature, and their redox potential and pH relative to the lapse of time was determined. The results are compiled in Table 3.

**Table 3**

| Time elapsed | Temperature | Specimen | | | |
|---|---|---|---|---|---|
| | | No.1 | | No. 2 | |
| | | Potential | pH | Potential | pH |
| 0 hour | 4°C | -288 mV | 7.4 | -282 mV | 7.4 |
| 25 hours | 22°C | -436 mV | 7.0 | -250 mV | 7.0 |
| 49 hours | 26 °C | -284 mV | 6.9 | -245 mV | 6.9 |
| 65 hours | 25 °C | -200 mV | 6.9 | -172 mV | 6.9 |

As shown in Table 3, reduced water obtained in accordance with the present invention has redox potential lower than -172 mV when its pH ranges from 7.4 to 6.9.

### Implementation 5 and 6

The reduced water obtained in the aforementioned Implementation 1 and the reduced water obtained in the aforementioned Implementation 2 were respectively poured into two PET bottles of the same size and thereafter sealed, to determine the variation in their redox potential relative to the lapse of time, each constituting Implementations 5 and 6, respectively. In the initial period lasting until 20 hours after the addition of hydrogen gas, the PET bottles were kept sealed. At the end of that period the PET bottles' caps were removed so that in the remaining period ambient air entered the bottles. The redox potentials measured are compiled in Table 4, while the variations occurring in the redox potentials of the Case 1 tap water and the Case 2 alkaline reduced water when exposed to air are shown in Table 5.

**Table 4**

| Time elapsed | | Specimen | |
|---|---|---|---|
| | | Implementation 5 | Implementation 6 |
| 0 hour | Sealed | -588 mV | -591 mV |
| 20 hours | | -624 mV | -629 mV |
| 9 hours | Open to air | +69 mV | +73 mV |
| 10 hours | | +59 mV | +72 mV |
| 22 hours | | +132 mV | +145 mV |
| 30 hours | | +137 mV | +151 mV |
| 46 hours | | +165 mV | +177 mV |
| 70 hours | | +139 mV | +148 mV |
| 94 hours | | +146 mV | +157 mV |
| 118 hours | | +147 mV | +157 mV |
| 166 hours | | +152 mV | +156 mV |

**Table 5**

| Time elapsed | | Specimen | |
|---|---|---|---|
| | | Tap water | Alkaline reduced water |
| 0 hour | Open to air | + 252 mV | -192 mV |
| 12 hours | | + 172 mV | + 144 mV |
| 20 hours | | + 178 mV | + 177 mV |
| 36 hours | | + 182 mV | + 198 mV |
| 60 hours | | + 158 mV | + 173 mV |
| 84 hours | | + 161 mV | + 175 mV |
| 108 hours | | + 140 mV | + 146 mV |
| 156 hours | | + 153 mV | + 153 mV |

From the results in Table 4, it was ascertained that the redox potential of reduced water obtained under the present invention rises sharply when the water is exposed to air, ultimately settling in the +150 to +159 mV range. Considering that the redox potential of both tap water and alkaline reduced water similarly settle within the +150 to +159 mV range (as shown in Table 5) under prolonged exposure to air, the rise in redox potential is apparently due to the fact that oxygen in the air mixes with the water, rather than that the dissolved hydrogen vaporizes.

Although the preferred embodiment of the present invention has been described above with reference to several concrete implementations, the present invention however is by no means limited to this embodiment as it will be obvious to a person skilled in the art that a wide variety of variations is possible without departing from the technical concepts stated in the Claims.

For instance, the present invention can be used to obtain reduced water with pH as low as around 6.5 but with redox potential no higher than -150 mV. Furthermore, the lower limit for the water's redox potential will decrease with its pH becoming greater in value, and may attain a level as low as -900 mV or less.

Thus, according to the present invention, it is possible to obtain reduced water that has pH close to neutral at no higher than 9.0 and no lower than 6.5 at normal temperature and pressure, and with extremely low redox potential of no higher than -150 mV. Such reduced water can therefore be ingested or used for cooking in large quantities on a daily basis without causing any health problems.

## Claims

1. Reduced water that has pH no higher than 9.0 and no lower than 6.5, and redox potential no higher than -150 mV and no lower than -900 mV at normal temperature and pressure.

2. The reduced water as set forth in Claim 1, wherein the pH is no higher than 8.5 and no lower than 6.5.

3. Reduced water obtained by dissolving hydrogen gas with a temperature ranging between -180 and 60 degrees Celsius and pressurized at between 0.5 and 500 atmosphere pressure in raw water with a temperature ranging between 0 and 50 degrees Celsius, then restoring the temperature and pressure of the water obtained to normal.

4. The reduced water as set forth in Claim 3, wherein at least one of the following is selected for use as the raw water: tap water, purified tap water, ionized alkaline water, mineral-containing water, spring water, desalinated seawater.

5. The reduced water as set forth in Claim 3 or Claim 4, wherein the pH is no higher than 9.0 and no lower than 6.5, and the redox potential is no higher than -150 mV and no lower than -900 mV.

6. The reduced water as set forth in Claim 5, wherein the pH is no higher than 8.5 and no lower than 6.5.

7. A reduced water production method comprising two (2) processes, such that:
Process (1) consists of dissolving hydrogen gas with a temperature ranging between -180 and 60 degrees Celsius and pressurized at between 0.5 and 500 atmosphere pressure in raw water with a temperature ranging between 0 and 50 degrees Celsius;
Process (2) consists of restoring the temperature and pressure of the water obtained in the above process (1) to normal.

8. The reduced water production method as set forth in Claim 7, wherein at least one of the following is selected for use as the raw water: tap water, purified tap water, ionized alkaline water, mineral-containing water, spring water, desalinated seawater.

9. The reduced water production method as set forth in Claim 7, wherein the supply of hydrogen gas is either the batch type or continuous flow type.
